# EUROPEAN PATENT SPECIFICATION

(11) **EP 4 474 580 B1**
(45) Date of publication and mention of the grant of the patent: **18.11.2026**
(21) Application number: 24206933.4
(22) Date of filing: 17.03.2023
(51) Int. Cl.: B63B 27/10, B63B 77/00, B63B 35/00, E02B 17/00

(54) **A METHOD OF INSTALLING A MONOPILE IN A SEABED USING A TRANSPORTATION BARGE OR VESSEL**
VERFAHREN ZUR INSTALLATION EINES MONOPILES IM MEERESBODEN UNTER VERWENDUNG EINES TRANSPORTKAHNS ODER EINES SCHIFFS
PROCÉDÉ D'INSTALLATION D'UN MONOPIEU DANS UN FOND MARIN À L'AIDE D'UNE BARGE OU D'UN NAVIRE DE TRANSPORT

(30) Priority: 18.03.2022 EP 22305322
(43) Date of publication of application: 11.12.2024
(62) Document number(s) of the earlier application(s) in accordance with Art. 76 EPC: 23712230.4 / 4 359 297
(73) Proprietor: TotalEnergies OneTech, 92400 Courbevoie (FR)
(72) Inventor: BOUNHOURE, François, 78290 CROISSY SUR SEINE (FR)
(74) Representative: Lavoix

(56) References cited:
- WO-A1-2018/117846
- WO-A1-2021/245175
- CN-A- 112 498 622
- JP-B1- 6 914 411
- US-A- 4 821 804

## Description

The present invention deals with a method of installing a monopile in a seabed at an installation location, comprising: charging the monopile on a transportation barge or vessel, lifting a longitudinal extremity of the monopile using a crane mounted on a heavy lift vessel or on a jack-up platform, disengaging the monopile from the transportation barge or vessel, and lowering the monopile with respect to the barge and hammering the monopile into the seabed.

It also deals with an assembly comprising the monopile and an internal lifting tool intended to equip the longitudinal extremity of the monopile.

Such monopile may serve as a support for an offshore wind mill.

Monopiles are huge steel structures, with a length up to 95 meters and more, including up to 50 meters in the seabed, and an external diameter up to 8 meters and more. Their mass may amount to 2000 metric tonnes or more.

In known processes, like for example shown in WO 2021/245 175 A1 or WO 2018/117 846 A1, at least one monopile is loaded on a regular transportation barge in a horizontal storage position. This regular transportation barge is carried near a heavy lift vessel or a jack-up platform located near the installation location. Using a crane mounted on the heavy lift vessel or the jack-up platform, the monopile is lifted and carried from the regular transportation barge to an upending barge or vessel having a tiltable upending tool, the monopile remaining approximately horizontal during carrying. Then the upending tool is tilted to put the monopile in a vertical position, wherein the monopile is partly immersed. Using the crane, the monopile is then disengaged from the upending tool, lowered and hammered into the seabed.

Such a process works well. However, it comprises many steps that are complex, due to the dimensions and mass of the monopile and as they are performed offshore. Also, the crane used to carry the monopile from the regular transportation barge to the upending barge or vessel has to withstand the full weight of the monopile, plus dynamic efforts due to relative movements of the monopile being carried. This is also time-consuming in crane revolving mode as subsequent ballasting operations are required in the meantime. As a consequence, such a crane is a huge, expensive piece of equipment.

An aim of the invention is thus to reduce the cost of installing the monopile.

To this end, the invention proposes a method according to claim 1.

In other embodiments, the method comprises one or several of the features corresponding to claims 2 to 9.

The invention and its advantages will be better understood upon reading the following description, given solely by way of example and with reference to the appended drawings, in which:
- Figure 1 is a schematic upper view of a monopile being charged on a transportation barge, showing a step of a method according to the invention,
- Figure 2 is a schematic upper view of the monopile shown in Figure 1 lying on a upending tool of the transportation barge,
- Figure 3 is a schematic upper view of the monopile and the transportation barge shown in Figures 1 and 2, after they have been moved near a heavy lift vessel, according to another step of the method,
- Figure 4 is a schematic side view of the heavy lift vessel, the transportation barge and the monopile shown in Figures 2 and 3, the monopile and the upending tool being rotated according to another step of the method,
- Figure 5 is a schematic view analogous to that shown in Figure 4, the monopile and the upending tool being in a vertical discharge position, wherein the monopile, an internal lifting tool and a chamber containing air form an assembly according to the invention,
- Figure 6 is a schematic side view of the heavy lift vessel and the monopile shown in Figures 2 to 5, after the monopile has been discharged from the upending tool, the monopile being lowered towards the seabed according to another step of the method, and guided by a gripper system,
- Figure 7 is a schematic perspective view of the internal lifting tool shown in Figures 3 to 6 for lifting a longitudinal extremity of the monopile,
- Figure 8 is a schematic side view of the heavy lift vessel and the monopile shown in Figures 3 to 6, the monopile being hammered into the seabed according to another step of the method,
- Figure 9 is a schematic upper view of the monopile shown in Figures 1 to 3, equipped with a sacrificial membrane or diaphragm according to a first variant of the method,
- Figure 10 is a schematic upper view of the monopile shown in Figures 1 to 3, equipped with an inflatable member located in the internal volume and attached to the monopile, according to a second variant of the method, and
- Figure 11 is a schematic upper view of the monopile shown in Figures 1 to 3, equipped with a plugging element located in the internal volume and fixed to the monopile, according to a third variant of the method.

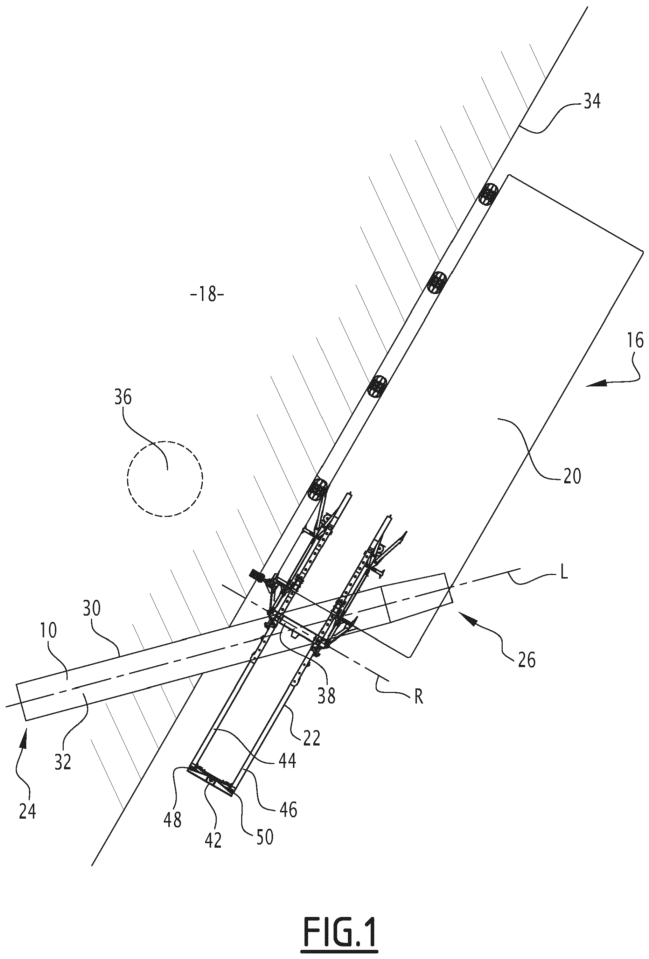

A method according to the invention will now be described with reference to Figures 1 to 8.

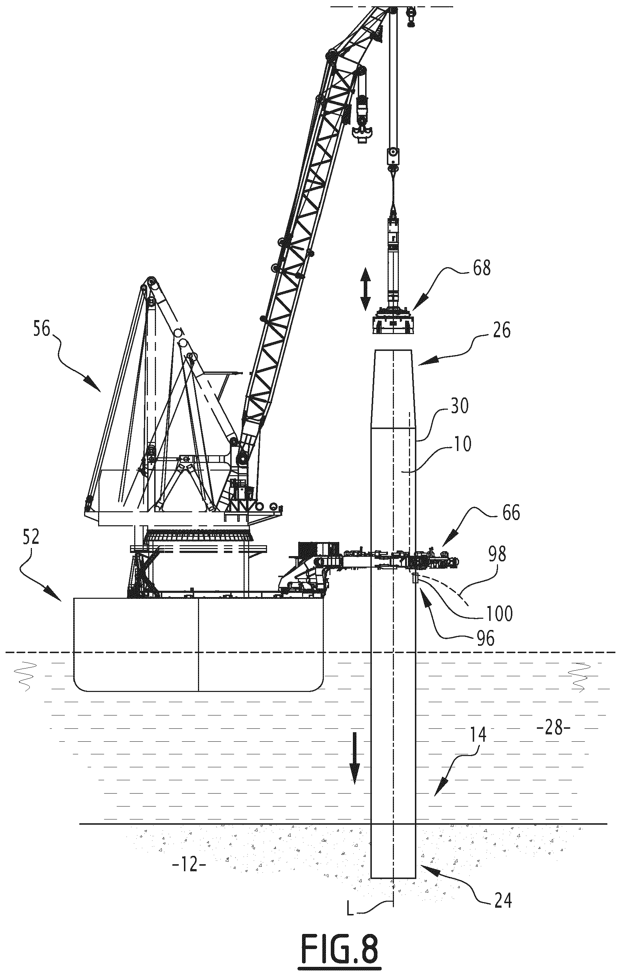

The method aims at installing a monopile 10 (shown in Figures 1-6 and 8) in a seabed 12 at an installation location 14 (Figure 8).

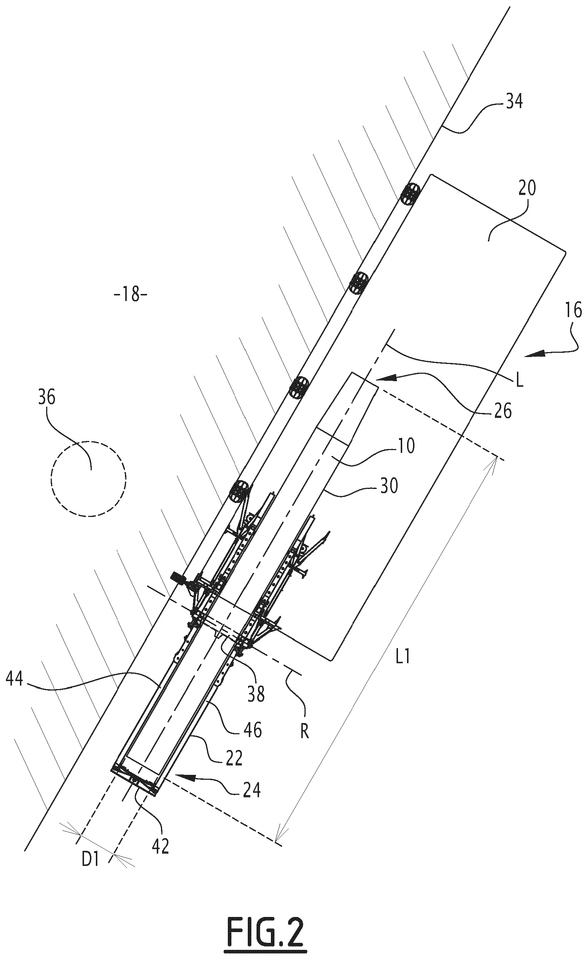

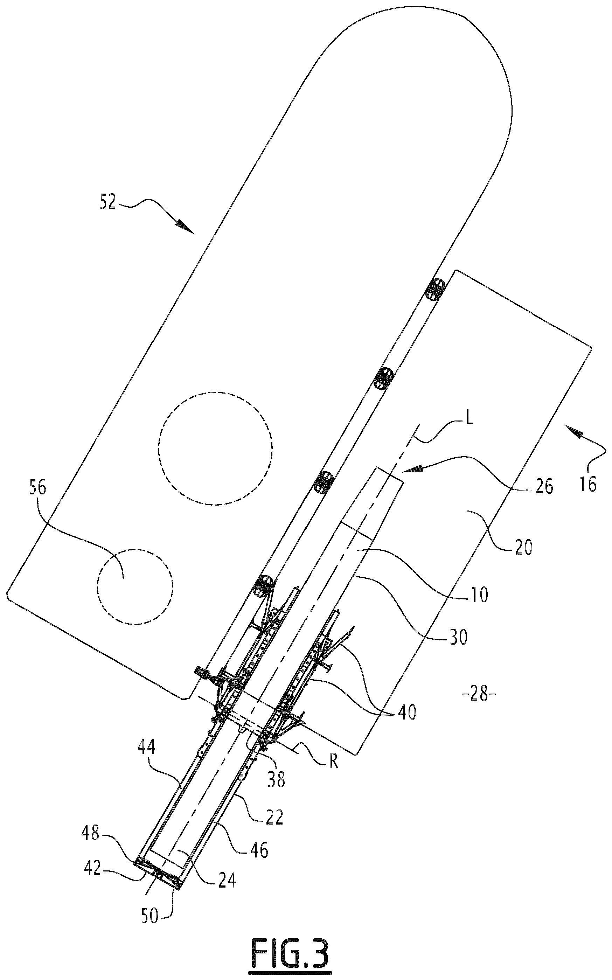

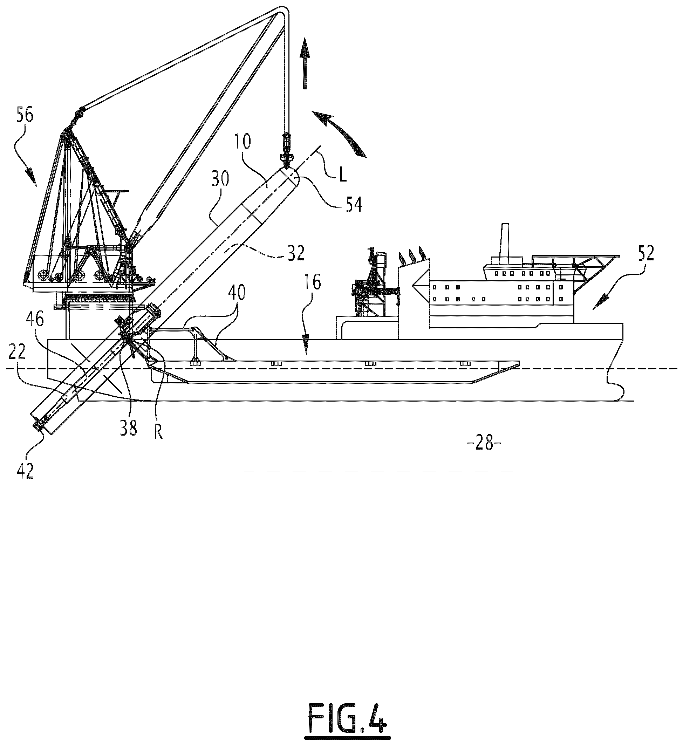

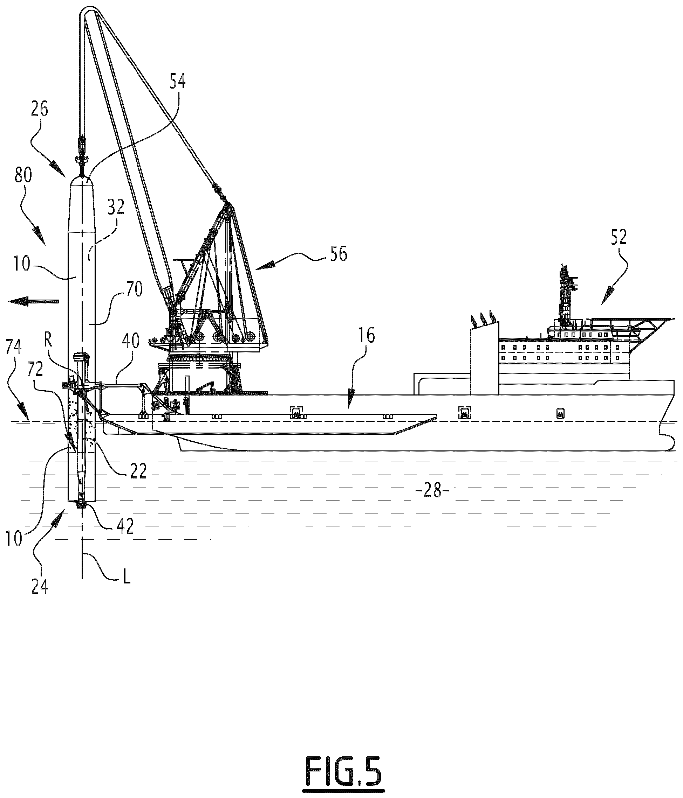

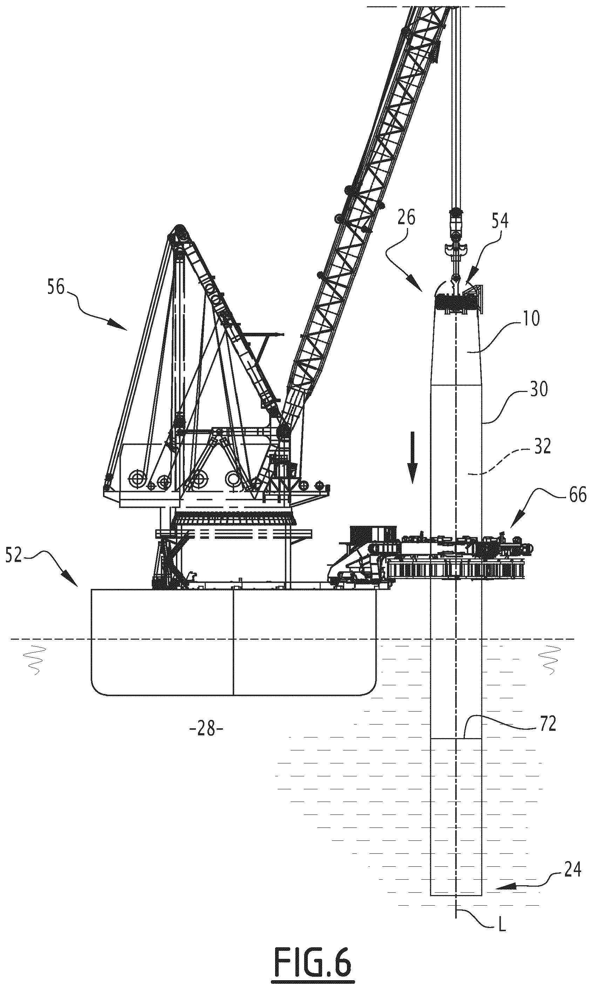

The method comprises charging the monopile 10 on a transportation barge 16 in a harbor 18 (Figure 1), the transportation barge having a main body 20, and an upending tool 22 mounted rotatable on the main body around a horizontal axis R, the monopile and the upending tool being in a transport position (Figure 2). The method comprises moving the transportation barge 16 from the harbor 18 to a vicinity of the installation location 14 (Figure 3), rotating the monopile 10 and the upending tool 22 together (Figure 4) from the transport position to a discharge position (Figure 5), and disengaging the monopile 10 from the upending tool 22. The method comprises lowering the monopile 10 with respect to the transportation barge 16 (Figure 6) and hammering the monopile 10 into the seabed 12 (Figure 8).

The monopile 10 defines a longitudinal axis L. The monopile 10 has a length L1 for example comprised between 60 and 100 meters, and a maximum external diameter D1 for example comprised between 7 and 12 meters. The monopile mass is for example comprised between 700 and 2000 tonnes.

The monopile 10 has a first longitudinal extremity 24 adapted to be pushed into the seabed 12, so that the monopile can for example serve as a support for a wind mill (not shown), the longitudinal axis L being vertical. Once the monopile 10 is installed, it has a second longitudinal extremity 26, opposite the first longitudinal extremity 24, still above a body of water 28, on which the wind mill can be fixed.

The monopile 10 for example comprises an external envelope 30 around the longitudinal axis L, the external envelope defining an internal volume 32 of the monopile.

During the step of charging the monopile 10, the transportation barge 16 is for example near a quay 34 of the harbor 18. Charging is for example performed using at least one crane 36 located on the quay 34. The monopile 10 is for example carried in a horizontal position, in which the crane 36 withstands a full weight of the monopile, and deposited on the upending tool 22.

As variants (not shown), charging is performed using a sheer leg (i.e. a pier floating crane), a heavy lift vessel available locally, or alternatively with self-propelled modular trailers from quay 34 to barge 16.

In the transport position, the monopile 10 rests on a cradle 38 of the upending tool 22 and is for example approximately horizontal.

The upending tool 22 is advantageously mounted on a support structure 40 of the transportation barge 16.

The upending tool 22 comprises a bottom part 42 located near the first longitudinal extremity 24 of the monopile 10, and advantageously two longitudinal telescopic beams 44, 46 located on either sides of the monopile along the horizontal axis R.

The bottom part 42 advantageously extends between distal extremities 48, 50 of the telescopic beams 44, 46. The bottom part 42 is for example perpendicular to the longitudinal axis L in the transport position.

In the transport position, the cradle 38 of the upending tool 22 partly surrounds the monopile 10 around the longitudinal axis L (Figure 2), the cradle being under the monopile. Advantageously, the cradle 38 is semicircular.

As a variant (not shown), the upending tool 22 comprises one or several other cradles, for example analogous to the cradle 38. The cradle 38 and the other cradles are distributed along the longitudinal direction L and support the monopile 10 in the transport position.

As a variant, a transportation vessel is used instead of the transportation barge 16. A transportation vessel is self-propelled, whereas a transportation barge is not, and therefore is towed by a tug boat (not shown).

A tug or vessel (not shown) is used for moving the transportation barge 16 from the harbor 18 towards the installation location 14 in case the transportation barge 16 is not self-propelled. The transportation barge 16 is then located near a heavy lift vessel 52.

As a variant (not shown), the transportation barge 16 is located near a jack-up platform equipped with a lifting crane.

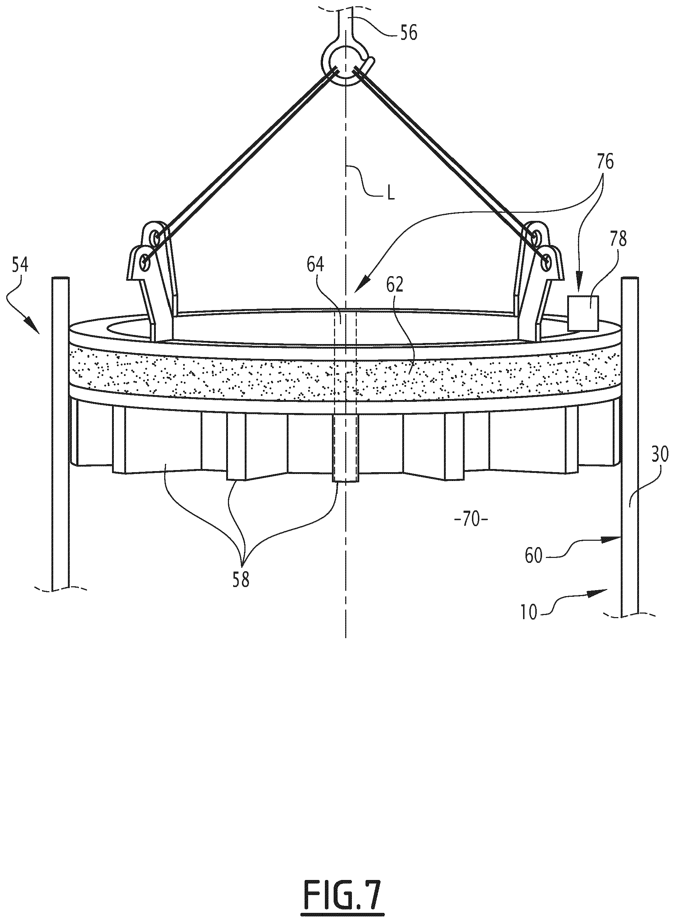

Before rotating the monopile 10 and the upending tool 22 together (Figure 4), the monopile is advantageously equipped at its second longitudinal extremity 26 with an internal lifting tool 54 shown in Figure 7.

The internal lifting tool 54 is adapted for being attached to a crane 56 mounted on the heavy lift vessel 52 (or a jack-up platform). The internal lifting tool 54 at least partly extends in the internal volume 32 of the monopile 10 and advantageously comprises a plurality of pads 58 (Figure 7) distributed around the longitudinal axis L and adapted to press on a radially inner surface 60 of the envelope 30, so as to stick to the monopile thanks to shear friction.

The internal lifting tool 54 for example comprises an air tight joint 62 extending around the longitudinal axis L and in contact with the envelope 30, and advantageously an air vent 64.

Rotating the monopile 10 and the upending tool 22 is obtained by lifting the second longitudinal extremity 26 of the monopile. Therefore, the crane 56 is connected to the second longitudinal extremity 26, advantageously to the internal lifting tool 54, and pulls the monopile. The monopile 10 and the upending tool 22 rotate together around the axis R to come to the discharge position, in which the monopile is vertical and has its first longitudinal extremity 24 resting on the bottom part 42 of the upending tool 22.

Still using the crane 56, the monopile 10 is disengaged from the upending tool 22 and for example put in a gripper system 66 (Figure 6) while it is being lowered with respect to the transportation barge 16 till the monopile 10 self penetrates and rests on the seabed 12. The monopile 10 is guided by the gripper system 66.

Then the internal lifting tool 54 is withdrawn, and the monopile 10 is hammered into the seabed 12 (Figure 8), for example using a hammer 68 carried by the crane 56.

Advantageously, during at least part of said rotating the monopile 10 and the upending tool 22 and/or said disengaging, the method comprises providing a chamber 70 containing an amount of air, the chamber 70 providing additional buoyancy to the monopile 10.

The monopile 10, being partly immersed, receives a moderate buoyancy force due to the volume of the envelope 30 displacing water. The chamber 70 provides additional buoyancy because it displaces more water. Hence the crane 56 does not have to withstand the full weight in air of the monopile 10. As a consequence, the crane 56 can have a maximum lifting capacity smaller than said full weight in air, and smaller than the weight of the monopile 10 in water without the chamber 70.

For example, said additional buoyancy amounts to several hundreds of tonnes, and advantageously more than 20% or even 30% of the monopile mass. For example, if the monopile mass is 2000 tonnes, the additional buoyancy brought by the chamber 70 may reach 600 tonnes.

For example, the chamber 70 extends within the internal volume 32 and is delimited downwards by a surface of free water 72 located under a waterline 74 of the monopile. Advantageously, the internal lifting tool 54 forms an upper limit of the chamber 70, thanks to the air tight joint 62.

Advantageously, the method comprises using a system 76 for adjusting the amount and the pressure of air in the chamber 70.

For example, the system 76 includes the air vent 64 of the internal lifting tool 54 for letting part of said amount of air exit from the chamber 70. This allows raising the surface of free water 72 with respect to said waterline 74, thereby decreasing the additional buoyancy brought by the chamber 70.

For example, the system 76 comprises at least one air pump 78 configured for injecting air into the chamber 70. This allows lowering the surface of free water 72 with respect to said waterline 74, thereby increasing the additional buoyancy brought by the chamber 70.

The air pump 78 is preferably an air compressor, and more preferably a centrifugal one.

The internal lifting tool 54 advantageously comprises an aperture, for example the air vent 64, for introducing compressed air provided by the air pump 78.

Among air compressors, centrifugal compressors are particularly preferred, since they allow high volume throughput with appropriate pressure, typically ranging from 0.5 to 5 barg. "Barg" stands for measured pressure in bar relative to the atmospheric pressure. For instance, if the atmospheric pressure is one bar and the pressure that is delivered at compressor outlet is 0,5 barg, then the absolute pressure at compressor outlet is 1,5 bar.

The air monitoring in the chamber 70 may be directly measured using conventional means, such as pressure gauge, optical or ultrasound sensor, and/or indirectly measured using weight sensor positioned on the lifting crane 56.

Commercial centrifugal compressors of sufficient throughput and pressure are suitable for use in the instant invention without specific design modification.

Compressor outlet may provide compressed air through a pipe connected to the chamber 70, ideally through a dedicated aperture in the internal lifting tool 54 or through the air vent 64. The pipe diameter is adapted to the compressor capacity and the working pressure that has been selected based on the monopile size and a desired buoyancy during the installation. Buoyancy may be adapted at each step of the installation of the monopile. It is advisable to install at least one air valve on the pipe anywhere between the compressor outlet and the chamber 70.

A large range of compressors is available in the industry, for example with a 0.6 to 16 barg working pressure and a 330-440 m3/minute capacity, and selection may be fine-tuned to the application option. A centrifugal compressor, for instance, could be appropriate for monopiles having a diameter of a magnitude of 10 m and a length of about 80m.

Altogether, the monopile 10, the internal lifting tool 54 and the chamber 70 form an assembly 80 according to the invention.

Thanks to the above described features, the cost of installing the monopile 10 is reduced.

Indeed, as the monopile 10 is installed on the transportation barge 16 (or on a vessel) on the upending tool 22 in a harbor 18 and not in the vicinity of the installation location 14, the number of steps performed offshore is reduced.

Besides, the crane 56 can have a maximum lifting capacity smaller than the full weight in air of the monopile 10. Such a crane is much less expensive, as there are more potential providers.

The optional step of providing a chamber 70 containing air further reduces the maximum lifting capacity that is needed. Besides, such a chamber 70 is for example easily obtained using the internal lifting tool 54 as an upper limit.

In case several monopiles are to be installed, the installation schedule can be improved at equivalent installation cost by mobilizing several low cost heavy lift vessels or jack-up platforms rather than one more expensive.

The above described method makes it possible to use jack-up platforms which usually have lower craneage than large heavy lift vessels.

The method allows installing large monopiles in shallow waters, as jack-up platforms have limited draft and can access shallow waters, which is not the case for heavy lift vessels.

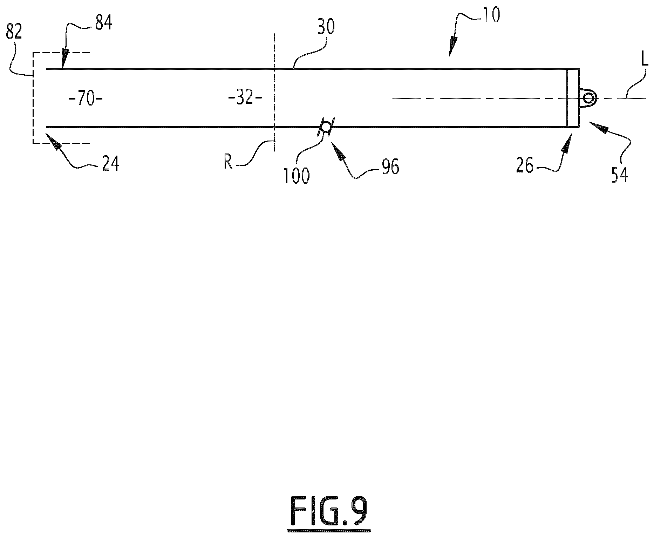

With reference to Figure 9, a method according to a first variant of the invention will now be described. The first variant is analogous to the method shown in Figures 1 to 8. The similarities will not be described again. Only the differences will be described in detail here after.

In the first variant, the chamber 70 extends within the internal volume 32, and is delimited downwards by a sacrificial membrane 82 or a diaphragm fixed on a lower end 84 of the monopile 10. The chamber 70 is not delimited by a surface of free water in fluid communication with the body of water 28.

In the example, the membrane 82 surrounds the lower end 84 around the longitudinal direction L.

The membrane 82 is watertight. When the monopile 10 is partly immersed in the body of water 28, the envelope 30 and the membrane 82 work as a hull defining the chamber 70.

The membrane 82 is called "sacrificial", as it can be torn apart when the monopile 10 penetrates into the seabed 12.

Before this happens, the amount of air in the chamber 70 may be reduced by allowing some water to flow in it in between the membrane 82 and the envelope 30 or by pumping water in (towards) the chamber 70.

In this variant, the internal lifting tool 54, if present, does not have to be air tight.

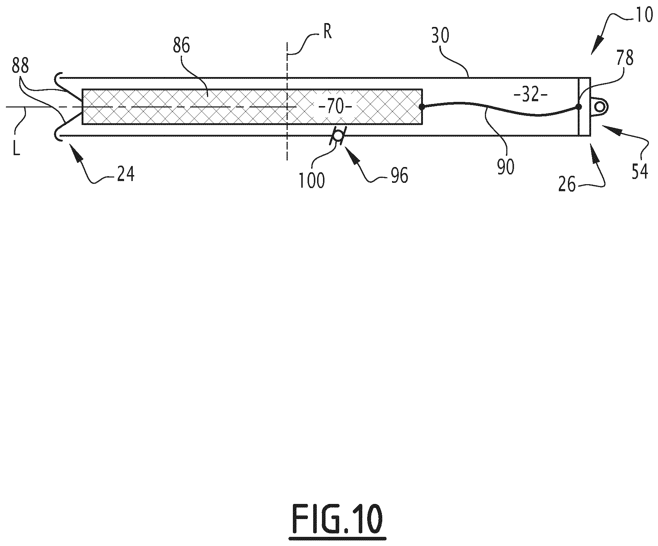

With reference to Figure 10, a method according to a second variant of the invention will now be described. The second variant is analogous to the method shown in Figures 1 to 8. The similarities will not be described again. Only the differences will be described in detail here after.

In the second variant, the chamber 70 comprises an inflatable member 86 located in the internal volume 32 and attached to the monopile 10. The inflatable member 86 is attached to the first longitudinal extremity 24 of the monopile by peripheral hooks 88.

When inflated with air, the inflatable member 86 operates as an "underwater lifting parachute", the monopile 10 being partly immersed. Water from the body of water 28 can freely circulate around the inflatable member 86.

The amount of air in the inflatable member 86, hence buoyancy, can advantageously be adjusted.

The inflatable member 86 is advantageously connected towards the second longitudinal extremity 26 by a link 90 allowing to help deploying the inflatable member 86 in the internal volume 32 and/or connecting the inflatable member to an air source, for example the pump 78 shown in Figure 7.

The inflatable member 86 is advantageously recovered before the monopile 10 penetrates into the seabed 12.

In this variant, the internal lifting tool 54, if present, does not have to be air tight, but could be, so as to provide additional buoyancy.

An air compressor, such as the ones described above, may be used to inflate the inflatable member 86, possibly via the internal lifting tool 54.

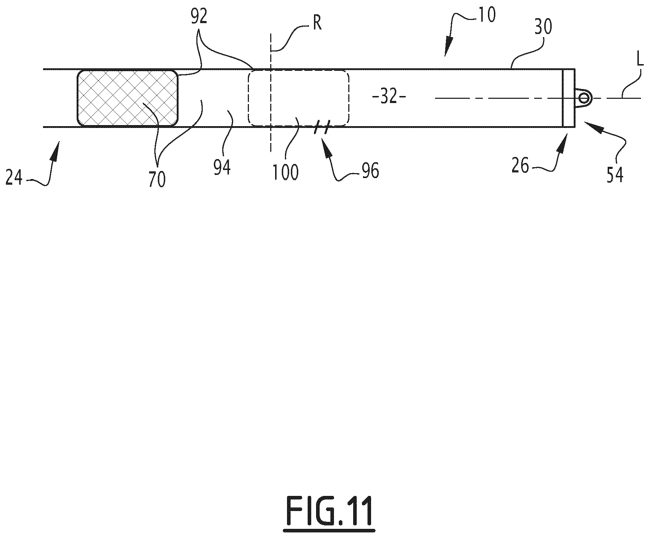

With reference to Figure 11, a method according to a third variant of the invention will now be described. The third variant is analogous to the first variant shown in Figure 9. The similarities will not be described again. Only the differences will be described in detail here after.

In the third variant, the chamber 70 is delimited downwards by an inflatable plugging element 92 located in the internal volume 32 and pressing against the envelope 30. The chamber 70 comprises the plugging element 92, and advantageously a part 94 of the internal volume 32 located above the plugging element 92 when the monopile 10 is in the discharge position.

The plugging element 92 maintains itself in a given longitudinal position with respect to the envelope 30 by friction, and advantageously prevents water from invading the part 94.

The longitudinal position can advantageously be selected before inflating the plugging element 92, which allows adjusting the additional buoyancy. In Figure 11, two positions are represented.

The plugging element 92 is advantageously recovered before the monopile 10 penetrated into the seabed 12.

In this variant, the internal lifting tool 54, if present, does not have to be air tight.

An air compressor, such as the ones described above, may be used to inflate the plugging element 92, possibly via the internal lifting tool 54.

In the method and its above variants, the external envelope 32 may define an orifice 96 intended to form a passage for at least one electric cable 98 (shown in Figure 8) from the internal volume 32 towards outside the monopile 10.

Such a cable is for example used to electrically connect a wind turbine (not shown) fixed to the monopile 10 to a network (not shown), once the monopile is installed (even if, for simplicity, the cable is shown in Figure 8, in which the monopile is not yet installed).

The passage is intended to be located above the seabed 12 once the monopile 10 is installed.

The method and its variants, in particular the first and third ones, may further comprise closing the orifice 96 with a temporary closing member 100, such as a plugging pin device, while the monopile 10 is being installed, in order to prevent water from flowing into the chamber 70.

In the third variant (Figure 11), the longitudinal position of the plugging element 92 can advantageously be chosen such that the plugging element actually forms the closing member 100.

Once the closing member 100 is removed, the cable 98 can be installed via the orifice 96.

## Claims

1. A method of installing a monopile (10) in a seabed (12) at an installation location (14), wherein the monopile (10) intended to be installed in the seabed (12) at the installation location (14) defines a longitudinal axis (L) and comprises an external envelope (30) around the longitudinal axis (L), the envelope (30) defining an internal volume (32) of the monopile (10), the monopile (10) having a first longitudinal extremity (24) and a second longitudinal extremity (26) opposite the first longitudinal extremity (24), said method comprising:
- in a harbor (18), charging the monopile (10) on a transportation barge (16) or vessel having a main body (20), and an upending tool (22) mounted rotatable on the main body (20) around a horizontal axis (R), the monopile (10) and the upending tool (22) being in a transport position in which the monopile (10) rests on at least one cradle (38) of the upending tool (22), the cradle (38) partly surrounding the monopile (10) around the longitudinal axis (L),
- moving the transportation barge (16) or vessel from the harbor (18) to a vicinity of the installation location (14),
- rotating the monopile (10) and the upending tool (22) together from the transport position to a discharge position, by lifting the second longitudinal extremity (26) of the monopile (10) using a crane (56) connected to the second longitudinal extremity (26), wherein, in the discharge position, the monopile is vertical, partly immersed in a body of water (28), and has its first longitudinal extremity (24) resting on a bottom part (42) of the upending tool (22),
- disengaging the monopile (10) from the upending tool (22) using the crane (56), and
- lowering the monopile (10) with respect to the transportation barge (16) or vessel and hammering the monopile (10) into the seabed (12),
whereby during at least part of said rotating the monopile (10) and the upending tool (22) and/or said disengaging, the method comprises providing a chamber (70) containing an amount of air, the chamber (70) providing additional buoyancy to the monopile (10) when the monopile (10) is partly immersed in the body of water (28) in a vertical position.

2. The method according to claim 1, wherein the external envelope (32) defines at least an orifice (96) intended to form a passage for at least one electric cable (98) from the internal volume (32) towards outside the monopile (10), the passage being intended to be located above the seabed (12) once the monopile (10) is installed, the method further comprising closing the orifice (96) with a temporary closing member (100).

3. The method according to claim 1 or 2, wherein said chamber (70) extends within the internal volume (32), the chamber (70) being delimited downwards by a surface of free water (72) located under a waterline (74) of the monopile (10).

4. The method according to any one of claims 1 to 3, further comprising equipping the second longitudinal extremity (26) of the monopile (10) with an internal lifting tool (54) adapted for being attached to the crane (56) and comprising an air tight joint (62) located around the longitudinal axis (L) and in contact with the envelope (30), the internal lifting tool (54) forming an upper limit of the chamber (70).

5. The method according to claim 4, wherein the internal lifting tool (54) comprises an air vent (64) adapted for letting part of said amount of air exit from the chamber (70) and for raising said surface of free water (72) with respect to said waterline (74).

6. The method according to claim 1 or 2, wherein said chamber (70) extends within the internal volume (32), the chamber (70) being delimited downwards by a sacrificial membrane (82) or diaphragm fixed on a lower end (84) of the monopile (10).

7. The method according to claim 1 or 2, wherein said chamber (70):
- comprises an inflatable member (86) located in the internal volume (32) and attached to the monopile (10), or
- is delimited downwards by an inflatable plugging element (92) located in the internal volume (32) and pressing against the envelope (30).

8. The method according to anyone of claims 1 to 7, further comprising using a system (76) for adjusting said amount of air in the chamber (70).

9. The method according to claim 8, wherein the system (76) comprises at least one air pump (78) configured for injecting air into the chamber (70).

## Patentansprüche

1. Verfahren zum Installieren eines Monopiles (10) in einem Meeresboden (12) an einer Installationsstelle (14), wobei das dazu bestimmte, an der Installationsstelle (14) im Meeresboden (12) zu installierende Monopile (10) eine Längsachse (L) definiert und eine Außenhülle (30) um die Längsachse (L) umfasst, wobei die Hülle (30) ein Innenvolumen (32) des Monopiles (10) definiert, wobei das Monopile (10) ein erstes Längsende (24) und ein dem ersten Längsende (24) gegenüberliegendes zweites Längsende (26) aufweist, wobei das Verfahren Folgendes umfasst:
- in einem Hafen (18), Verladen des Monopiles (10) auf einen Transportprahm (16) oder ein Schiff mit einem Hauptkörper (20) und einem schwenkbar am Hauptkörper (20) um eine horizontale Achse (R) drehbar montierten Aufrichtwerkzeug (22), wobei sich das Monopile (10) und das Aufrichtwerkzeug (22) in einer Transportstellung befinden, in der das Monopile (10) auf mindestens einer Auflage (38) des Aufrichtwerkzeugs (22) ruht, wobei die Auflage (38) das Monopile (10) teilweise um die Längsachse (L) herum umgibt,
- Bewegen des Transportprahms (16) oder des Schiffs vom Hafen (18) in die Nähe der Installationsstelle (14),
- gemeinsames Drehen des Monopiles (10) und des Aufrichtwerkzeugs (22) von der Transportstellung in eine Aussetzstellung durch Anheben des zweiten Längsendes (26) des Monopiles (10) unter Verwendung eines mit dem zweiten Längsende (26) verbundenen Krans (56), wobei in der Aussetzstellung das Monopile vertikal ist, teilweise in einen Wasserkörper (28) eingetaucht ist und mit seinem ersten Längsende (24) auf einem unteren Teil (42) des Aufrichtwerkzeugs (22) ruht,
- Lösen des Monopiles (10) von dem Aufrichtwerkzeug (22) unter Verwendung des Krans (56), und
- Absenken des Monopiles (10) in Bezug auf den Transportprahm (16) oder das Schiff und Einrammen des Monopiles (10) in den Meeresboden (12),
wobei während zumindest eines Teils des Drehens des Monopiles (10) und des Aufrichtwerkzeugs (22) und/oder des Lösens das Verfahren das Bereitstellen einer Kammer (70) umfasst, die eine Luftmenge enthält, wobei die Kammer (70) dem Monopile (10) zusätzlichen Auftrieb verleiht, wenn das Monopile (10) in einer vertikalen Position teilweise in den Wasserkörper (28) eingetaucht ist.

2. Verfahren nach Anspruch 1, wobei die Außenhülle (32) mindestens eine Öffnung (96) definiert, die dazu bestimmt ist, einen Durchgang für mindestens ein elektrisches Kabel (98) aus dem Innenvolumen (32) nach außerhalb des Monopiles (10) zu bilden, wobei der Durchgang dazu bestimmt ist, sich oberhalb des Meeresbodens (12) zu befinden, sobald das Monopile (10) installiert ist, wobei das Verfahren ferner das Verschließen der Öffnung (96) mit einem temporären Verschlusselement (100) umfasst.

3. Verfahren nach Anspruch 1 oder 2, wobei sich die Kammer (70) innerhalb des Innenvolumens (32) erstreckt, wobei die Kammer (70) nach unten durch eine freie Wasseroberfläche (72) begrenzt ist, die sich unterhalb einer Wasserlinie (74) des Monopiles (10) befindet.

4. Verfahren nach einem der Ansprüche 1 bis 3, ferner umfassend das Ausrüsten des zweiten Längsendes (26) des Monopiles (10) mit einem inneren Hebewerkzeug (54), das dafür ausgelegt ist, an dem Kran (56) befestigt zu werden, und das eine luftdichte Verbindung (62) umfasst, die um die Längsachse (L) herum angeordnet ist und in Kontakt mit der Hülle (30) steht, wobei das innere Hebewerkzeug (54) eine obere Begrenzung der Kammer (70) bildet.

5. Verfahren nach Anspruch 4, wobei das innere Hebewerkzeug (54) eine Entlüftungsöffnung (64) umfasst, die dafür ausgelegt ist, einen Teil der Luftmenge aus der Kammer (70) austreten zu lassen und die freie Wasseroberfläche (72) in Bezug auf die Wasserlinie (74) anzuheben.

6. Verfahren nach Anspruch 1 oder 2, wobei sich die Kammer (70) innerhalb des Innenvolumens (32) erstreckt, wobei die Kammer (70) nach unten durch eine Opfermembran (82) oder ein Diaphragma begrenzt ist, die bzw. das an einem unteren Ende (84) des Monopiles (10) befestigt ist.

7. Verfahren nach Anspruch 1 oder 2, wobei die Kammer (70):
- ein aufblasbares Element (86) umfasst, das in dem Innenvolumen (32) angeordnet und an dem Monopile (10) befestigt ist, oder
- nach unten durch ein aufblasbares Verschlusselement (92) begrenzt ist, das in dem Innenvolumen (32) angeordnet ist und gegen die Hülle (30) drückt.

8. Verfahren nach einem der Ansprüche 1 bis 7, ferner umfassend die Verwendung eines Systems (76) zum Einstellen der Luftmenge in der Kammer (70).

9. Verfahren nach Anspruch 8, wobei das System (76) mindestens eine Luftpumpe (78) umfasst, die dafür konfiguriert ist, Luft in die Kammer (70) einzuspritzen.

## Revendications

1. Un procédé d'installation d'un monopieu (10) dans un fond marin (12) à un emplacement d'installation (14), le monopieu (10) destiné à être installé dans le fond marin (12) à l'emplacement d'installation (14) définissant un axe longitudinal (L) et comprenant une enveloppe externe (30) autour de l'axe longitudinal (L), l'enveloppe (30) définissant un volume interne (32) du monopieu (10), le monopieu (10) ayant une première extrémité longitudinale (24) et une seconde extrémité longitudinale (26) opposée à la première extrémité longitudinale (24), ledit procédé comprenant :
- dans un port (18), le chargement du monopieu (10) sur une barge de transport (16) ou un navire présentant un corps principal (20), et un outil de redressement (22) monté de manière rotative sur le corps principal (20) autour d'un axe horizontal (R), le monopieu (10) et l'outil de redressement (22) étant dans une position de transport dans laquelle le monopieu (10) repose sur au moins un berceau (38) de l'outil de redressement (22), le berceau (38) entourant partiellement le monopieu (10) autour de l'axe longitudinal (L),
- le déplacement de la barge de transport (16) ou du navire du port (18) vers le voisinage de l'emplacement d'installation (14),
- la rotation conjointe du monopieu (10) et de l'outil de redressement (22) depuis la position de transport jusqu'à une position de déchargement, par le levage de la seconde extrémité longitudinale (26) du monopieu (10) au moyen d'une grue (56) reliée à la seconde extrémité longitudinale (26), dans laquelle, dans la position de déchargement, le monopieu est vertical, partiellement immergé dans une étendue d'eau (28), et a sa première extrémité longitudinale (24) reposant sur une partie inférieure (42) de l'outil de redressement (22),
- le désengagement du monopieu (10) de l'outil de redressement (22) au moyen de la grue (56), et
- l'abaissement du monopieu (10) par rapport à la barge de transport (16) ou au navire et l'enfoncement du monopieu (10) dans le fond marin (12) au marteau,
moyennant quoi, pendant au moins une partie de ladite rotation du monopieu (10) et de l'outil de redressement (22) et/ou dudit désengagement, le procédé comprend la mise à disposition d'une chambre (70) contenant une quantité d'air, la chambre (70) fournissant une flottabilité supplémentaire au monopieu (10) lorsque le monopieu (10) est partiellement immergé dans l'étendue d'eau (28) dans une position verticale.

2. Le procédé selon la revendication 1, dans lequel l'enveloppe externe (32) définit au moins un orifice (96) destiné à former un passage pour au moins un câble électrique (98) depuis le volume interne (32) vers l'extérieur du monopieu (10), le passage étant destiné à être situé au-dessus du fond marin (12) une fois que le monopieu (10) est installé, le procédé comprenant en outre la fermeture de l'orifice (96) au moyen d'un élément de fermeture temporaire (100).

3. Le procédé selon la revendication 1 ou 2, dans lequel ladite chambre (70) s'étend à l'intérieur du volume interne (32), la chambre (70) étant délimitée vers le bas par une surface d'eau libre (72) située sous une ligne de flottaison (74) du monopieu (10).

4. Le procédé selon l'une quelconque des revendications 1 à 3, comprenant en outre l'équipement de la seconde extrémité longitudinale (26) du monopieu (10) avec un outil de levage interne (54) apte à être fixé à la grue (56) et comprenant un joint étanche à l'air (62) situé autour de l'axe longitudinal (L) et en contact avec l'enveloppe (30), l'outil de levage interne (54) formant une limite supérieure de la chambre (70).

5. Le procédé selon la revendication 4, dans lequel l'outil de levage interne (54) comprend un évent d'air (64) apte à laisser sortir de la chambre (70) une partie de ladite quantité d'air et à faire monter ladite surface d'eau libre (72) par rapport à ladite ligne de flottaison (74).

6. Le procédé selon la revendication 1 ou 2, dans lequel ladite chambre (70) s'étend à l'intérieur du volume interne (32), la chambre (70) étant délimitée vers le bas par une membrane sacrificielle (82) ou un diaphragme fixé sur une extrémité inférieure (84) du monopieu (10).

7. Le procédé selon la revendication 1 ou 2, dans lequel ladite chambre (70) :
- comprend un élément gonflable (86) situé dans le volume interne (32) et fixé au monopieu (10), ou
- est délimitée vers le bas par un élément de bouchage gonflable (92) situé dans le volume interne (32) et pressé contre l'enveloppe (30).

8. Le procédé selon l'une quelconque des revendications 1 à 7, comprenant en outre l'utilisation d'un système (76) pour régler ladite quantité d'air dans la chambre (70).

9. Le procédé selon la revendication 8, dans lequel le système (76) comprend au moins une pompe à air (78) configurée pour injecter de l'air dans la chambre (70).
